# EUROPEAN PATENT SPECIFICATION

(11) **EP 4 095 953 B1**
(45) Date of publication and mention of the grant of the patent: **28.02.2024**
(21) Application number: 20929105.3
(22) Date of filing: 09.12.2020
(51) Int. Cl.: B32B 37/00, B32B 37/06, B32B 37/10, H01M 4/88, H01M 8/1004, H01M 8/242, H01M 8/10

(54) **LAMINATING DEVICE**
LAMINIERVORRICHTUNG
DISPOSITIF DE STRATIFICATION

(30) Priority: 30.03.2020 CN 202010236086
(43) Date of publication of application: 30.11.2022
(73) Proprietor: Jiangsu Lead Hydrogen Intelligent Equipment Co., Ltd., Wuxi, Jiangsu 214026 (CN)
(72) Inventor: SHAO, Meng, Wuxi, Jiangsu 214028 (CN)
(74) Representative: Ström & Gulliksson AB
(86) International application number: PCT/CN2020/134964
(87) International publication number: WO 2021/196715

(56) References cited:
- CN-A- 1 748 286
- CN-A- 102 205 756
- CN-A- 104 183 857
- CN-A- 111 313 039
- CN-U- 211 605 281
- JP-A- 2002 050 347
- JP-A- 2008 147 144
- JP-A- 2008 181 703

## Description

### FIELD OF DISCLOSURE

The present disclosure relates to a technical field of production of fuel cells, and specifically to a laminating device.

### BACKGROUND OF DISCLOSURE

In a production process of fuel cells, two materials are usually needed to be laminated together. For example, a five-layer film electrode is formed by laminating frames on both sides of a three-layer film electrode (CCM). Currently, most materials are laminated by flat lamination. The flat lamination generally requires that a pressure is greater than or equal to 20MPa, temperature is greater than or equal to 100 °C, lamination time is greater than or equal to 2 min, and bubbles between the materials are not easily discharged, resulting in a long lamination time, low efficiency, and low yield. Document CN104183857A discloses a device for laminating fuel cell membranes using pressure rollers.

### SUMMARY OF DISCLOSURE

Based on this, it is necessary to provide a laminating device that improves above-mentioned defects in order to solve problems of long lamination time, low efficiency, and low yield in the prior art using flat lamination.

A laminating device comprises:
an adhesion roller, disposed controllably to rotate around its own axis, used to adhere a sheet material;
a fixed laminating roller, disposed controllably to rotate around its own axis, used to wind a second film material; and
a moving laminating roller, disposed controllably to rotate around its own axis, and reciprocating between the adhesion roller and the fixed laminating roller;
wherein a pickup position and a laminating position are provided during a process of the moving laminating roller reciprocating between the adhesion roller and the fixed laminating roller; when the moving laminating roller is located at the pickup position, the moving laminating roller abuts against the adhesion roller to transfer the sheet material on the adhesion roller to the moving laminating roller; when the moving laminating roller is located at the laminating position, the moving laminating roller abuts against the fixed laminating roller to laminate the sheet material adhered on the moving laminating roller onto the second film material wound on the fixed laminating roller, in accordance with claim 1.

The above-mentioned laminating device, in actual laminating operation, firstly the moving laminating roller is moved to the pickup position to adhere the sheet material on the adhesion roller, making the sheet material transfer to the moving laminating roller. And then the moving laminating roller is moved to the laminating position, and the moving laminating roller rotates around its own axis, making the sheet material on the moving laminating roller align with the second film material on the fixed laminating roller. Finally, the moving laminating roller and the fixed laminating roller rotate synchronously making the sheet material laminate onto the second film material; namely the moving laminating roller and the fixed laminating roller are used to roll the sheet material and the second film material, which has a good stability of rolling, production of bubbles are avoided, and lamination quality and lamination efficiency are improved.

According to an embodiment of the present disclosure, the moving laminating roller is movably disposed along its own axial direction. This way, during a process of the moving laminating roller moving to the laminating position, the moving laminating roller can be moved along its own axis, making the sheet material on the moving laminating roller align with the second film material on the fixed laminating roller in an axial direction of the moving laminating roller, so as to improve alignment accuracy of the sheet material and the second film material.

According to an embodiment of the present disclosure, the adhesion roller and the fixed laminating roller are disposed at intervals along a first direction, and the moving laminating roller reciprocates between the adhesion roller and the fixed laminating roller along the first direction.

According to an embodiment of the present disclosure, the moving laminating roller is rotatable around a rotation axis parallel to the first direction. This way, during a process of the moving laminating roller moving to the laminating position, the moving laminating roller can be rotated by rotating the rotation axis, improving parallelism of the moving laminating roller and the fixed laminating roller, it is beneficial to improve the alignment accuracy of the sheet and the second film material.

According to an embodiment of the present disclosure, the first direction is perpendicular to an axial direction of the adhesion roller and an axial direction of the fixed laminating roller.

According to an embodiment of the present disclosure, the laminating device further comprises a controller, and a first position sensor and a second position sensor both electrically connected to the controller; and the first position sensor is used to detect position information of the sheet material on the moving laminating roller; the controller is used to control rotation of the moving laminating roller around its own axis, rotation of the moving laminating roller around the rotation axis, and movement of the moving laminating roller along its axial direction according to position information detected by the first position sensor;
the second position sensor is used to detect position information of the second film material on the fixed laminating roller; and the controller is used to control rotation of the fixed laminating roller around its own axis according to position information detected by the second position sensor. This way, when positions of the sheet material and the second film material detected by the first position sensor and the second position sensor respectively are not aligned, the controller controls the moving laminating roller to rotate or move correspondingly until the positions of the sheet material and the second film material are aligned, which is beneficial to improve the alignment accuracy of the sheet material and the second film material.

According to an embodiment of the present disclosure, the laminating device further comprises a first pressing roller that moves synchronously with the moving laminating roller, and a gap is defined between the first pressing roller and the moving laminating roller;
when the moving laminating roller is located at the pickup position, the sheet material adhered on the adhesion roller is inserted into the gap between the first pressing roller and the moving laminating roller with rotation of the adhesion roller. This way, setting of the first pressing roller is convenient for introducing the sheet material to the moving laminating roller, it is convenient for the sheet material to be separated from the adhesion roller and then adhered by the moving laminating roller.

According to an embodiment of the present disclosure, the laminating device further comprises a cutting component, the cutting component comprises a cutting member and two second pressing rollers; the two second pressing rollers abut against the adhesion roller, and a cutting channel is defined between the two second pressing rollers; the cutting member cuts a first film material adhered on the adhesion roller into the sheet material though the cutting channel. This way, the first film material is conveyed to the adhesion roller and adhered by the adhesion roller, and the two second pressing rollers abut against the first film material on the adhesion roller; the cutting member cuts the first film material adhered on the adhesion roller into sheet material through the cutting channel.

According to an embodiment of the present disclosure, the laminating device further comprises a protective film peeling roller; the protective film peeling roller is disposed on a conveying path of a first film material conveyed to the adhesion roller; and the protective film peeling roller is used to wind a protective film of the first film material.

According to an embodiment of the present disclosure, the moving laminating roller and the fixed laminating roller can be heated rollers or normal temperature rollers. This way, the heated rollers or the normal temperature rollers can be adopted according to glue properties of the sheet material and the second film material. The heated roller can be heated to setting temperature, and the normal temperature roller does not have a function of heating.

### BRIEF DESCRIPTION OF DRAWINGS

FIG. 1 is a schematic diagram of laminating a first frame in a production process of a five-layer film electrode.
FIG. 2 is a schematic structural diagram of a laminating device configured to laminate the first frame in an embodiment of the present application.
FIG. 3 is a schematic diagram of laminating a second frame in the production process of the five-layer film electrode.
FIG. 4 is a schematic structural diagram of the laminating device configured to laminate the second frame in an embodiment of the present application.

### DETAILED DESCRIPTION OF PREFERRED EMBODIMENTS

In order to make the above objects, features, and advantages of the present application more clearly understood, specific embodiments of the present application will be described in detail below with reference to the accompanying drawings. In a following description, numerous specific details are set forth in order to provide a thorough understanding of the present application. However, the present application can be implemented in many other ways different from those described here, and those skilled in the art can make similar improvements without violating a connotation of the present application. Therefore, the present application is not limited by the specific embodiments disclosed below.

In the description of the present application, it should be understood that, an orientation or positional relationship indicated by terms "center", "longitudinal", "lateral", "length", "width", "thickness", "upper", "lower", "front", "back", "left", "right", "vertical", "horizontal", "top", "bottom", inner", "outer", "clockwise", "counterclockwise", "axial", "radial", "circumferential" is based on the orientation or positional relationship shown in the accompanying drawings, and is only for convenience of describing the present application and simplifying the description, rather than indicating or implying that a device or element referred to must be provided with a particular orientation, be constructed and operate in a particular orientation, and therefore should not be understood as a limitation to the present application.

In addition, terms "first" and "second" are only used for descriptive purposes and should not be understood as indicating or implying relative importance or implying a number of indicated technical features. Therefore, a feature delimited with "first", "second" may expressly or implicitly include at least one of that features. In a description of the present application, "a plurality" means at least two, such as two, three, etc., unless expressly and specifically defined otherwise.

In the present application, unless expressly specified and limited otherwise, terms "installed", "communicated", "connected", "fixed" and other terms should be interpreted in a broad sense, for example, it can be a fixed connection, a detachable connection, or an integrated; it can be a mechanical connection or an electrical connection; it can be directly connected, or indirectly connected through an intermediate medium, and it can be an internal communication between two elements or an interaction relationship between the two elements, unless otherwise explicitly defined. For those of ordinary skill in the art, specific meanings of the above terms in the present application can be understood according to specific situations.

In the present application, unless expressly stated and defined otherwise, a first feature "on" or "under" a second feature may be that the first feature is in direct contact with the second feature, or the first feature and the second feature are indirectly contacted through an intermediary. In addition, the first feature being "above", "over" and "on" the second feature may mean that the first feature is directly above or obliquely above the second feature, or simply means that the first feature is higher than the second feature in a horizontal direction. The first feature being "below", "under" and "below" the second feature may mean that the first feature is directly below or obliquely below the second feature, or simply means that the first feature is lower than the second feature in a horizontal direction.

It should be noted that when an element is referred to as being "fixed to" or "arranged on" another element, it can be directly on another element, or an intervening element may also be present. When an element is referred to as being "connected" to another element, it can be directly connected to another element or intervening elements may also be present. Terms "vertical", "horizontal", "upper", "lower", "left", "right" and similar expressions used here are only for a purpose of illustration and do not represent an only embodiment.

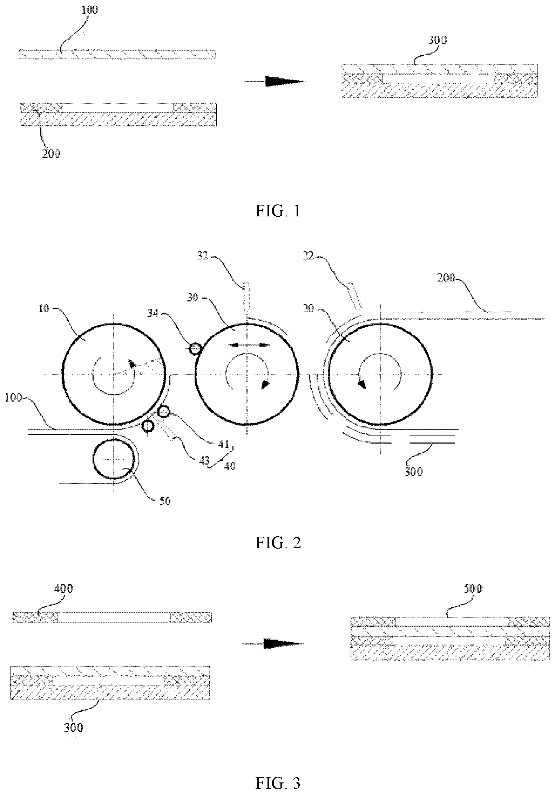

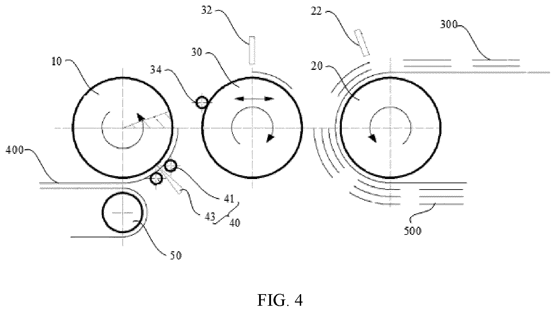

As shown in FIG. 2 and FIG. 4, an embodiment of this disclosure provides a laminating device, including an adhesion roller 10, a fixed laminating roller 20, and a moving laminating roller 30.

The adhesion roller 10 is disposed controllably to rotate around its own axis, and can adhere to a sheet material, namely, the sheet material adhered on the adhesion roller 10 can rotate with the adhesion roller 10. The fixed laminating roller 20 is disposed controllably to rotate around its own axis, and is used to wind a second film material, so as to drive the second film material to move with rotation of the fixed laminating roller 20. The moving laminating roller 30 is disposed controllably to rotate around its own axis and can reciprocate between the adhesion roller 10 and the fixed laminating roller 20.

Wherein a pickup position and a laminating position are provided during a process of the moving laminating roller 30 reciprocating between the adhesion roller 10 and the fixed laminating roller 20. When the moving laminating roller 30 is located at the pickup position, the moving laminating roller 30 abuts against the adhesion roller 10 to make the sheet material on the adhesion roller 10 adhere onto the moving laminating roller 30, namely, transferring the sheet material on the adhesion roller 10 to the moving laminating roller 30. When the moving laminating roller 30 is located at the laminating position, the moving laminating roller 30 abuts against the fixed laminating roller 20 to laminate the sheet material adhered on the moving laminating roller 30 onto the second film material wound on the fixed laminating roller 20.

When the above-mentioned laminating device in actual laminating operation, firstly the moving laminating roller 30 is moved to the pickup position to adhere to the sheet material on the adhesion roller 10, making the sheet material transfer to the moving laminating roller. Then, the moving laminating roller 30 moves to the laminating position, and the moving laminating roller 30 rotates around its own axis, making the sheet material on the moving laminating roller 30 align with the second film material on the fixed laminating roller 20. Finally, the moving laminating roller 30 and the fixed laminating roller 20 rotate synchronously, making the sheet material laminate attach to the second film material; namely, the moving laminating roller 30 and the fixed laminating roller 20 are used to roll the sheet material and the second film material, which has a good stability of rolling, production of bubbles are avoided, and lamination quality and lamination efficiency are improved. It can be understood that the adhesion roller 10, the fixed laminating roller 20, and the moving laminating roller 30 are parallel to each other. An adhesion force of the moving laminating roller 30 to the sheet material is less than a bonding force after the sheet material and the second film material are laminated, so that after the sheet material and the second film material are laminated, the sheet material is separated from the moving laminating roller 30 and is attached to the second film material.

Specifically in an embodiment, the adhesion roller 10, a fixed laminating roller 20, and the moving laminating roller 30 can all be driven to rotate around their own axes by driving elements such as a rotating motor. Use of a driving member such as a rotating motor to drive rotation is a relatively mature technology, and it will not be repeated here.

In an embodiment of this disclosure, the moving laminating roller 30 is movably disposed to move along its own axial direction. This way, during a process of the moving laminating roller 30 moving to the laminating position, the moving laminating roller 30 can be moved along its own axial direction, making the sheet material on the moving laminating roller 30 align with the second film material on the fixed laminating roller 20 in an axial direction of the moving laminating roller 30, so as to improve alignment accuracy of the sheet material and the second film material.

In some embodiments, the adhesion roller 10 and the fixed laminating roller 20 are disposed at intervals along a first direction; the moving laminating roller 30 can reciprocate between the adhesion roller 10 and the fixed laminating roller 20 along the first direction, that is to say, the moving laminating roller 30 can move to the pickup position and the laminating position along the first direction. It should be noted that the moving laminating roller 30 can be driven to move along the first direction by setting driving structures such as a sliding rail or a motor. Movement of the moving laminating roller 30 along the first direction can adopt driving structures in the prior art, as long as the moving laminating roller 30 can be driven to move along the first direction, which is not limited here. In embodiments shown in FIG. 2 and FIG. 4, the first direction is a left-to-right direction.

Specifically, in an embodiment, the moving laminating roller 30 is rotatable around a rotation axis parallel to the first direction. This way, during the process of the moving laminating roller 30 moving to the laminating position, the moving laminating roller 30 can be rotated by rotating the rotation axis, improving parallelism of the moving laminating roller 30 and the fixed laminating roller 20, which is beneficial to improve the alignment accuracy of the sheet material and the second film material. Optionally, the first direction is perpendicular to an axial direction of the adhesion roller 10 and an axial direction of the fixed laminating roller 20.

Specifically in an embodiment, the laminating device further includes a controller, and a first position sensor 32 and a second position sensor 22 both electrically connected to the controller. The first position sensor 32 detects position information of the sheet material on the moving laminating roller 30. The controller controls rotation of the moving laminating roller 30 around its own axis, rotation of the moving laminating roller 30 around the rotation axis, and movement of the laminating roller 30 along its own axial direction according to position information detected by the first position sensor 32. The second position sensor 22 detects position information of the second film material on the fixed laminating roller 20. The controller controls rotation of the fixed laminating roller 20 around its own axis according to position information detected by the second position sensor 22. This way, when positions of the sheet material and the second film material detected by the first position sensor 32 and the second position sensor 22 respectively are not aligned, the controller controls the moving laminating roller 30 to rotate or move correspondingly until the positions of the sheet material and the second film material are aligned, which is beneficial to improving the alignment accuracy of the sheet material and the second film material. Optionally, both the first position sensor 32 and the second position sensor 22 can be photoelectric position sensors, laser position sensors, visual position sensors, etc., which are not limited here. The controllers can use industrial computers.

In an embodiment of this disclosure, the laminating device further includes a first pressing roller 34 that moves synchronously with the moving laminating roller 30. A gap is defined between the first pressing roller 34 and the moving laminating roller 30. When the moving laminating roller 30 is located at the pickup position, the sheet material adhered on the adhesion roller 10 is inserted into the gap between the first pressing roller 34 and the moving laminating roller 30 with rotation of the adhesion roller 10. Setting of the first pressing roller 34 is convenient for introducing the sheet material to the moving laminating roller 30, and it is convenient for the sheet material to be separated from the adhesion roller 10 and then is adhered by the moving laminating roller 30. Optionally, both the adhesion roller 10 and the moving laminating roller 30 can adopt vacuum adhesion or electrostatic adhesion and the like to adhere the sheet material.

Furthermore, an adhesion force of an area of the adhesion roller 10 facing at least the sheet material of the moving laminating roller 30 is less than an adhesion force of the moving laminating roller 30 to the sheet material. This way, it is conducive for the sheet material to be separated from the adhesion roller 10 and then is adhered by the moving laminating roller 30.

Specifically in an embodiment, the first pressing roller 34 can be rotatably disposed around its own axis, for example, the first pressing roller 34 is mounted by bearings. This way, the first pressing roller 34 presses the sheet material passing through the gap between the first pressing roller 34 and the moving laminating roller 30, so as to rotate with the rotation of the moving laminating roller 30 around its own axis.

In an embodiment of this disclosure, the laminating device further includes a cutting component 40 used to cut a first film material into the sheet material. The cutting component 40 includes a cutting member 43 and two second pressing rollers 41; the two second pressing rollers 41 abut against the adhesion roller 10. And a cutting channel is defined between the two pressing rollers 41 to allow the cutting member 43 to pass through. The cutting member 43 cuts the first film material adhered on the adhesion roller 10 into the sheet material through the cutting channel. This way, the first film material is conveyed to the adhesion roller 10 and adhered by the adhesion roller 10; the two second pressing rollers 41 abut against the first film material on the adhesion roller 10; the cutting member 43 cuts the first film material adhered on the adhesion roller 10 into sheet material through the cutting channel. The two second pressing rollers 41 also play a role of preventing tension of the first film material in front of and behind the cutting component 40, so as to avoid affecting the tension of the first film material after the first film material is cut by the cutting member 43. It can be understood that a sheet material formed by cutting continues to be adhered by the adhesion roller 10, and can rotate with the adhesion roller 10 to a position corresponding to the moving laminating roller 30 at the pickup position.

In an embodiment, the cutting member 43 can be a cutter, the cutter can pass through the cutting channel to cut the first film material. In another embodiment, the cutting member 43 can also be a laser cutting machine, the laser cutting machine outputs a laser beam, and the laser beam passes through the cutting channel to cut the first film material. Furthermore, an escape slot is defined on the adhesion roller 10, when cutting the first film material, the escape slot corresponds to the cutting channel, so as to avoid damage to the adhesion roller 10 caused by the cutter or the laser beam.

In an embodiment of this disclosure, the laminating device further includes a protective film peeling roller 50, the protective film peeling roller 50 is disposed on a conveying path of the first film material conveyed to the adhesion roller 10, and is used to wind a protective film of the first film material, so as to peel off the protective film on the first film material.

Optionally, the above-mentioned moving laminating roller 30 and the fixed laminating roller 20 can be heated rollers or normal temperature rollers. This way, the heated rollers or the normal temperature rollers can be adopted according to adhesive properties of the sheet material and the second film material. The heated roller can be heated to a set temperature, and the normal temperature roller does not have a function of heating.

It should be noted that the above-mentioned laminating device can be used for production of five-layer film electrodes, but can not be limited to this, which is not limited here. Use of the laminating device of the present application will be described in detail below by taking the production of the five-layer film electrodes as an example.

Please refer to FIG. 1 and FIG. 3, two sides of a three-layer film electrode 100 are laminated with frames (i.e., a first frame 200 and a second frame 400) to form a five-layer film electrode 500. When using the above-mentioned laminating device to produce the five-layer film electrode 500, firstly the three-layer film electrode 100 and the first frame 200 are laminated to form an intermediate film material 300 by using the above-mentioned laminating device; and then the second frame 400 is laminated to the intermediate film material 300 to form the five-layer film electrode 500 by using the above-mentioned laminating device. Specific steps are as follows:

Please refer to FIG. 1 and FIG. 2, firstly, the above-mentioned first film material 100 can be the three-layer film electrode 100 (attached with a protective film); the sheet material is formed by cutting the three-layer film electrode 100; the second film material is a film material of the first frame 200. The film material of the first frame 200 includes a first frame protective film and a plurality of the first frames 200 laminated to one side of the first frame protective film. The plurality of first frames 200 are disposed at intervals along a length direction of the first frame protective film. In actual lamination operation, the three-layer film electrode 100 is peeled off the protective film by the protective film peeling roller 50, conveyed to the adhesion roller 10, and rotates with the adhesion roller 10. A cutting mechanism cuts the three-layer film electrode 100 on the adhesion roller 10 into a sheet material of the three-layer film electrode 100; and then the sheet material of the three-layer film electrode 100 is transferred to the moving laminating roller 30 at the pickup position, and moves to the laminating position with the moving laminating roller 30. The sheet material of the three-layer film electrode 100 is aligned with the first frame 200 on the film material of the first frame 200 by the movement of the moving laminating roller 30 along its own axial direction, the rotation of the moving laminating roller 30 around its own axis, and the rotation of the moving laminating roller 30 around the above-mentioned rotation axis. Finally, the moving laminating roller 30 reaches the laminating position and rotates around respective axes synchronously with the fixed laminating roller 20, so as to laminate the sheet material of the three-layer film electrode 100 onto the first frame 200 of the film material of the first frame 200 to form the intermediate film material 300.

Please refer to FIG. 3 and FIG. 4, then, the above-mentioned first film material is a film material of the second frame 400; the film material of the second frame 400 is laminated with a protective film; the sheet material is formed by cutting the film material of the second frame 400; the second film material is the above-mentioned intermediate film material 300. In actual lamination operation, the film material of the second frame 400 is peeled off the protective film by the protective film peeling roller 50, conveyed to the adhesion roller 10, and rotates with the adhesion roller 10. The cutting component 40 cuts the film material of the second frame 400 on the adhesion roller 10 into a sheet material of the second frame 400; and then the sheet material of the second frame 400 is transferred to the moving laminating roller 30 at the pickup position, and moves to the laminating position with the moving laminating roller 30. And then the sheet material of the second frame 400 on the moving laminating roller 30 is aligned with the first frame 200 of the intermediate film material 300 on the fixed laminating roller 20 by the movement of the moving laminating roller 30 along its own axial direction, the rotation of the moving laminating roller 30 around its own axis, and the rotation of the moving laminating roller 30 around the above-mentioned rotation axis. Finally, the moving laminating roller 30 reaches the laminating position and rotates around respective axes synchronously with the fixed laminating roller 20, so as to laminate the sheet material of the second frame 400 onto the intermediate film material 300 to form the five-layer film electrode 500 with the protective film.

The above-mentioned laminating device has following advantages:

In actual lamination operation, firstly the moving laminating roller 30 moves to the pickup position to adhere the sheet material on the adhesion roller 10, making the sheet material transfer to the moving laminating roller. Then, the moving laminating roller 30 moves to the laminating position, and the rotation of the moving laminating roller 30 around its own axis makes the sheet material on the moving laminating roller 30 align with the second film material on the fixed laminating roller 20. Finally, the moving laminating roller 30 and the fixed laminating roller 20 rotate synchronously making the sheet material attach to the second film material, namely the sheet material and the second film material are rolled by using the moving laminating roller 30 and the fixed laminating roller 20, which has a good stability of rolling, production of bubbles are avoided, and lamination quality and lamination efficiency are improved, and production cost is reduced.

The sheet material and the first film material are aligned with each other by the rotation of the moving laminating roller 30 around its own axis, the rotation of the moving laminating roller 30 around the above-mentioned rotation axis, and the movement of the moving laminating roller 30 along its own axial direction, which contributes to improving alignment accuracy.

By setting the first position sensor 32 and the second position sensor 22, the controller can precisely control the movement and rotation of the moving laminating roller 30, and the rotation of the fixed laminating roller 20, thereby further improving the alignment accuracy of the sheet material and the first film material.

The above-mentioned embodiments only represent several embodiments of the present application, and the descriptions thereof are relatively specific and detailed, but should not be construed as limiting the scope of the present application. It should be pointed out that for those skilled in the art, without departing from the concept of the present application, several modifications and improvements can be made, which all belong to a protection scope of the present application. Therefore, the protection scope of the patent of the present application shall be subject to appended claims.

## Claims

1. A laminating device, wherein the laminating device comprises:
an adhesion roller (10), disposed controllably to rotate around its own axis, used to adhere a sheet material, the sheet material is cut from a first film material adhered on the adhesion roller (10);
a fixed laminating roller (20), disposed controllably to rotate around its own axis, used to wind a second film material; and **characterized in that** the lamination device comprises
a moving laminating roller (30), disposed controllably to rotate around its own axis, and reciprocating between the adhesion roller (10) and the fixed laminating roller (20);
wherein a pickup position and a laminating position are provided during a process of the moving laminating roller (30) reciprocating between the adhesion roller (10) and the fixed laminating roller (20); when the moving laminating roller (30) is located at the pickup position, the moving laminating roller (30) abuts against the adhesion roller (10) to transfer the sheet material on the adhesion roller (10) to the moving laminating roller (30); when the moving laminating roller (30) is located at the laminating position, the moving laminating roller (30) abuts against the fixed laminating roller (20) to laminate the sheet material adhered on the moving laminating roller (30) onto the second film material wound on the fixed laminating roller (20).

2. The laminating device as claimed in claim 1, **characterized in that** the moving laminating roller (30) is movably disposed along its own axial direction.

3. The laminating device as claimed in claim 2, **characterized in that** the adhesion roller (10) and the fixed laminating roller (20) are disposed at intervals along a first direction, and the moving laminating roller (30) reciprocates between the adhesion roller (10) and the fixed laminating roller (20) along the first direction.

4. The laminating device as claimed in claim 3, **characterized in that** the moving laminating roller (30) is rotatable around a rotation axis parallel to the first direction.

5. The laminating device as claimed in claim 3, **characterized in that** the first direction is perpendicular to an axial direction of the adhesion roller (10) and an axial direction of the fixed laminating roller (20).

6. The laminating device as claimed in claim 4, **characterized in that** the laminating device further comprises a controller, and a first position sensor (32) and a second position sensor (22) both electrically connected to the controller; and the first position sensor (32) is used to detect position information of the sheet material on the moving laminating roller (30); the controller is used to control rotation of the moving laminating roller (30) around its own axis, rotation of the moving laminating roller (30) around the rotation axis, and movement of the moving laminating roller (30) along its axial direction according to position information detected by the first position sensor (32);
the second position sensor (22) is used to detect position information of the second film material on the fixed laminating roller (20), and the controller is used to control rotation of the fixed laminating roller (20) around its own axis according to position information detected by the second position sensor (22).

7. The laminating device as claimed in claim 1, **characterized in that** the laminating device further comprises a first pressing roller (34) that moves synchronously with the moving laminating roller (30), and a gap is defined between the first pressing roller (34) and the moving laminating roller (30);
when the moving laminating roller (30) is located at the pickup position, the sheet material adhered on the adhesion roller (10) is inserted into the gap between the first pressing roller (34) and the moving laminating roller (30) with rotation of the adhesion roller (10).

8. The laminating device as claimed in claim 1, **characterized in that** the laminating device further comprises a cutting component (40), the cutting component (40) comprises a cutting member (43) and two second pressing rollers (41); the two second pressing rollers (41) abut against the adhesion roller (10), and a cutting channel is defined between the two second pressing rollers (41); the cutting member (43) cuts the first film material adhered on the adhesion roller (10) into the sheet material though the cutting channel.

9. The laminating device as claimed in claim 1, **characterized in that** the laminating device further comprises a protective film peeling roller (50), the protective film peeling roller (50) is disposed on a conveying path of the first film material conveyed to the adhesion roller (10), and the protective film peeling roller (50) is used to wind a protective film of the first film material.

10. The laminating device as claimed in claim 1, **characterized in that** the moving laminating roller (30) and the fixed laminating roller (20) can be heated rollers or normal temperature rollers.

## Patentansprüche

1. Laminiervorrichtung, wobei die Laminiervorrichtung umfasst:
eine Haftwalze (10), die steuerbar rotierend um ihre eigene Achse angeordnet ist, und verwendet wird, ein Blattmaterial anzuhaften, wobei das Blattmaterial aus einem auf der Haftwalze (10) haftenden ersten Filmmaterial geschnitten ist;
eine feste Laminierwalze (20), die steuerbar rotierend um ihre eigene Achse angeordnet ist, und verwendet wird, ein zweites Filmmaterial aufzuwickeln; und
**dadurch gekennzeichnet, dass** die Laminiervorrichtung eine bewegliche Laminierwalze (30) umfasst, die steuerbar rotierend um ihre eigene Achse angeordnet ist, und die sich zwischen der Haftwalze (10) und der festen Laminierwalze (20) hin- und herbewegt;
wobei während eines Vorgangs der Hin- und Herbewegung der beweglichen Laminierwalze (30) zwischen der Haftwalze (10) und der festen Laminierwalze (20) eine Aufnahmeposition und eine Laminierposition vorgesehen sind; wobei, wenn sich die bewegliche Laminierwalze (30) an der Aufnahmeposition befindet, die bewegliche Laminierwalze (30) an der Haftwalze (10) anliegt, um das Blattmaterial auf der Haftwalze (10) auf die bewegliche Laminierwalze (30) zu übertragen; wobei, wenn sich die bewegliche Laminierwalze (30) an der Laminierposition befindet, die bewegliche Laminierwalze (30) an der festen Laminierwalze (20) anliegt, um das an der beweglichen Laminierwalze (30) haftende Blattmaterial auf das auf der festen Laminierwalze (20) aufgewickelte zweite Folienmaterial zu laminieren.

2. Laminiervorrichtung nach Anspruch 1, **dadurch gekennzeichnet, dass** die bewegliche Laminierwalze (30) entlang ihrer eigenen Axialrichtung beweglich angeordnet ist.

3. Laminiervorrichtung nach Anspruch 2, **dadurch gekennzeichnet, dass** die Haftwalze (10) und die feste Laminierwalze (20) in Abständen entlang einer ersten Richtung angeordnet sind, und wobei die bewegliche Laminierwalze (30) sich zwischen der Haftwalze (10) und der festen Laminierwalze (20) entlang der ersten Richtung hin- und herbewegt.

4. Laminiervorrichtung nach Anspruch 3, **dadurch gekennzeichnet, dass** die bewegliche Laminierwalze (30) um eine zur ersten Richtung parallele Rotationsachse rotierbar ist.

5. Laminiervorrichtung nach Anspruch 3, **dadurch gekennzeichnet, dass** die erste Richtung senkrecht zu einer Axialrichtung der Haftwalze (10) und einer Axialrichtung der festen Laminierwalze (20) ist.

6. Laminiervorrichtung nach Anspruch 4, **dadurch gekennzeichnet, dass** die Laminiervorrichtung ferner eine Steuerung sowie einen ersten Positionssensor (32) und einen zweiten Positionssensor (22) umfasst, die beide elektrisch mit der Steuerung verbunden sind; und wobei der erste Positionssensor (32) verwendet wird, um Positionsinformationen des Blattmaterials auf der beweglichen Laminierwalze (30) zu erfassen; wobei die Steuerung verwendet wird, um eine Rotation der beweglichen Laminierwalze (30) um ihre eigene Achse, eine Rotation der beweglichen Laminierwalze (30) um die Rotationsachse und eine Bewegung der beweglichen Laminierwalze (30) entlang ihrer Axialrichtung entsprechend der durch den ersten Positionssensor (32) erfassten Positionsinformationen zu steuern;
wobei der zweite Positionssensor (22) verwendet wird, um Positionsinformationen des zweiten Filmmaterials auf der festen Laminierwalze (20) zu erfassen, und wobei die Steuerung verwendet wird, um eine Rotation der festen Laminierwalze (20) um ihre eigene Achse entsprechend der durch den zweiten Positionssensor (22) erfassten Positionsinformationen zu steuern.

7. Laminiervorrichtung nach Anspruch 1, **dadurch gekennzeichnet, dass** die Laminiervorrichtung ferner eine erste Anpresswalze (34) umfasst, die sich synchron mit der beweglichen Laminierwalze (30) bewegt, und wobei zwischen der ersten Anpresswalze (34) und der beweglichen Laminierwalze (30) ein Spalt definiert ist;
wobei, wenn sich die bewegliche Laminierwalze (30) in der Aufnahmeposition befindet, das an der Haftwalze (10) anhaftende Blattmaterial mit Rotation der Haftwalze (10) in den Spalt zwischen der ersten Anpresswalze (34) und der beweglichen Laminierwalze (30) eingeführt wird.

8. Laminiervorrichtung nach Anspruch 1, **dadurch gekennzeichnet, dass** die Laminiervorrichtung ferner eine Schneidkomponente (40) umfasst, wobei die Schneidkomponente (40) ein Schneidelement (43) und zwei zweite Anpresswalzen (41) umfasst; wobei die zwei zweiten Anpresswalzen (41) an der Haftwalze (10) anliegen, und wobei ein Schneidkanal zwischen den zwei zweiten Anpresswalzen (41) definiert ist; wobei das Schneidelement (43) das an der Haftwalze (10) haftende erste Filmmaterial durch den Schneidkanal in das Blattmaterial schneidet.

9. Laminiervorrichtung nach Anspruch 1, **dadurch gekennzeichnet, dass** die Laminiervorrichtung ferner eine Schutzfilmabziehwalze (50) umfasst, wobei die Schutzfilmabziehwalze (50) auf einem Förderweg des zu der Haftwalze (10) geförderten ersten Folienmaterials angeordnet ist, und wobei die Schutzfilmabziehwalze (50) verwendet wird, um einen Schutzfilm des ersten Filmmaterials aufzuwickeln.

10. Laminiervorrichtung nach Anspruch 1, **dadurch gekennzeichnet, dass** die bewegliche Laminierwalze (30) und die feste Laminierwalze (20) Heizwalzen oder Normaltemperaturwalzen sein können.

## Revendications

1. Dispositif de stratification, dans lequel le dispositif de stratification comprend :
un rouleau d'adhérence (10), disposé de façon contrôlable pour tourner autour de son propre axe, utilisé pour faire adhérer un matériau en feuille, le matériau en feuille étant coupé à partir d'un premier matériau de film amené à adhérer sur le rouleau d'adhérence (10) ;
un rouleau de stratification fixe (20), disposé de façon contrôlable autour de son propre axe, utilisé pour enrouler un deuxième matériau de film ; et **caractérisé en ce que** le dispositif de stratification comprend un rouleau de stratification mobile (30), disposé de façon contrôlable pour tourner autour de son propre axe, et réaliser un mouvement de va-et-vient entre le rouleau d'adhérence (10) et le rouleau de stratification fixe (20) ;
dans lequel une position de capture et une position de stratification sont fournies pendant un processus de mouvement de va-et-vient du rouleau de stratification mobile (30) entre le rouleau d'adhérence (10) et le rouleau de stratification fixe (20) ; lorsque le rouleau de stratification mobile (30) est situé au niveau de la position de capture, le rouleau de stratification mobile (30) vient en butée contre le rouleau d'adhérence (10) pour transférer le matériau en feuille sur le rouleau d'adhérence (10) vers le rouleau de stratification mobile (30) ; lorsque le rouleau de stratification mobile (30) est situé au niveau de la position de stratification, le rouleau de stratification mobile (30) vient en butée contre le rouleau de stratification fixe (20) pour stratifier le matériau en feuille amené à adhérer sur le rouleau de stratification mobile (30) sur le deuxième matériau de film enroulé sur le rouleau de stratification fixe (20).

2. Dispositif de stratification selon la revendication 1, **caractérisé en ce que** le rouleau de stratification mobile (30) est disposé de façon mobile le long de sa propre direction axiale.

3. Dispositif de stratification selon la revendication 2, **caractérisé en ce que** le rouleau d'adhérence (10) et le rouleau de stratification fixe (20) sont disposés à intervalles le long d'une première direction, et le rouleau de stratification mobile (30) réalise un mouvement de va-et-vient entre le rouleau d'adhérence (10) et le rouleau de stratification fixe (20) le long de la première direction.

4. Dispositif de stratification selon la revendication 3, **caractérisé en ce que** le rouleau de stratification mobile (30) est rotatif autour d'un axe de rotation parallèle à la première direction.

5. Dispositif de stratification selon la revendication 3, **caractérisé en ce que** la première direction est perpendiculaire à une direction axiale du rouleau d'adhérence (10) et une direction axiale du rouleau de stratification fixe (20).

6. Dispositif de stratification selon la revendication 4, **caractérisé en ce que** le dispositif de stratification comprend en outre un dispositif de commande, et un premier capteur de position (32) et un deuxième capteur de position (22) tous deux électriquement connectés au dispositif de commande ; et le premier capteur de position (32) est utilisé pour détecter des informations de position du matériau en feuille sur le rouleau de stratification mobile (30) ; le dispositif de commande est utilisé pour commander une rotation du rouleau de stratification mobile (30) autour de son propre axe, une rotation du rouleau de stratification mobile (30) autour de l'axe de rotation, et un mouvement du rouleau de stratification mobile (30) le long de sa direction axiale selon des informations de position détectées par le premier capteur de position (32) ;
le deuxième capteur de position (22) est utilisé pour détecter des informations de position du deuxième matériau de film sur le rouleau de stratification fixe (20), et le dispositif de commande est utilisé pour commander une rotation du rouleau de stratification fixe (20) autour de son propre axe selon des informations de position détectées par le deuxième capteur de position (22) .

7. Dispositif de stratification selon la revendication 1, **caractérisé en ce que** le dispositif de stratification comprend en outre un premier rouleau de pression (34) qui se déplace de façon synchrone avec le rouleau de stratification mobile (30), et un espace est défini entre le premier rouleau de pression (34) et le rouleau de stratification mobile (30) ;
lorsque le rouleau de stratification mobile (30) est situé au niveau de la position de capture, le matériau en feuille amené à adhérer sur le rouleau d'adhérence (10) est inséré dans l'espace entre le premier rouleau de pression (34) et le rouleau de stratification mobile (30) avec une rotation du rouleau d'adhérence (10).

8. Dispositif de stratification selon la revendication 1, **caractérisé en ce que** le dispositif de stratification comprend un composant de coupe (40), le composant de coupe (40) comprend un élément de coupe (43) et deux deuxièmes rouleaux de pression (41) ; les deux deuxièmes rouleaux de pression (41) viennent buter contre le rouleau d'adhérence (10), et un canal de coupe est défini entre les deux deuxièmes rouleaux de pression (41) ; l'élément de coupe (43) coupe le premier matériau de film amené à adhérer sur le rouleau d'adhérence (10) en matériau en feuille par le biais du canal de coupe.

9. Dispositif de stratification selon la revendication 1, **caractérisé en ce que** le dispositif de stratification comprend en outre un rouleau de décollement de film protecteur (50), le rouleau de décollement de film protecteur (50) est disposé sur un trajet de transport du premier matériau de film transporté vers le rouleau d'adhérence (10), et le rouleau de décollement de film protecteur (50) est utilisé pour enrouler un film protecteur du premier matériau de film.

10. Dispositif de stratification selon la revendication 1, **caractérisé en ce que** le rouleau de stratification mobile (30) et le rouleau de stratification fixe (20) peuvent être des rouleaux chauffés ou des rouleaux à température normale.
